# EUROPÄISCHE PATENTSCHRIFT

(11) **EP 2 784 241 B1**
(45) Veröffentlichungstag und Bekanntmachung des Hinweises auf die Patenterteilung: **14.03.2018**
(21) Anmeldenummer: 14161551.8
(22) Anmeldetag: 25.03.2014
(51) Int. Cl.: E04D 13/04, F24J 2/46, F24J 2/52, H01L 31/04, F24J 2/04, F24J 2/00, H02S 20/23

(54) **Dachbedeckung zur Nutzung der Sonnenenergie**
Roof covering for utilising solar energy
Couverture de toit pour l'utilisation de l'énergie solaire

(30) Priorität: 28.03.2013 EP 13161767
(43) Veröffentlichungstag der Anmeldung: 01.10.2014
(73) Patentinhaber: Swisspearl Group AG, 8867 Niederurnen (CH)
(72) Erfinder: Gervasoni, Aristide, 8880 Walenstadt SG (CH)
(74) Vertreter: Koelliker, Robert

(56) Entgegenhaltungen:
- EP-A1- 2 587 186
- WO-A2-2010/128375
- WO-A2-2012/120208
- WO-A2-2012/168627
- DE-U1-202008 009 241

## Beschreibung

Die Erfindung betrifft eine Dachbedeckung, ein Verfahren zum Montieren der Dachbedeckung, eine Wasser Auffangwanne sowie die Verwendung der Dachbedeckung insbesondere zur Nutzung der Sonnenenergie mittels Photovoltaik Panel, Solarpanel, Solarmodulen und/oder Sonnenkollektoren.

Die Gewinnung von Energie aus Sonnenlicht, auch Sonnenenergie oder Solarenergie genannt, hat in neuerer Zeit an Bedeutung gewonnen und wird in Zukunft noch wichtiger. Deshalb werden vermehrt Platten wie beispielsweise Photovoltaik Panel, Solarpanel, Solarmodule und Sonnenkollektoren zur Erzeugung von Warm- und/oder Heisswasser vor allem auf Dächern und Fassaden von Gebäuden und Infrastrukturbauten montiert.

Bei bestehenden Dächern werden üblicherweise solche Panels, Module oder Kollektoren auf das beispielsweise mit Ziegeln bedeckte Dach montiert.

Bei Neubauten, Teil- oder Total-Renovationen ist es jedoch vorteilhaft, wenn solche Panels, Module oder Kollektoren direkt die schützende Dachbedeckung, d.h. eine Indach-Bedeckung, bilden. So muss nicht zuerst das Dach aufwändig mit beispielsweise Ziegeln bedeckt werden um in einem nachfolgenden Schritt die Panels, Module oder Kollektoren zu befestigen.

Um den hohen Anforderungen einer Dachbedeckung zu genügen, ist es jedoch essentiell, dass unter anderem keinerlei Wasser in den Dachuntergrund eindringt, was zu Schäden führen kann. Zudem muss die Dachbedeckung auch so konstruiert sein, dass sie Drucklasten wie beispielsweise Schnee, standhalten kann, ohne beschädigt zu werden.

Bei herkömmlichen Dachbedeckungen werden diese Anforderungen beispielsweise mit kleinformatigen Ziegeln erreicht, die auf einem engmaschigen Lattenrost befestigt sind.

Bei den zur Energiegewinnung notwendigen Panels, Modulen und Kollektoren gestaltet sich die Aufgabe jedoch schwieriger, da diese wesentlich grössere Abmessungen aufweisen als kleinformatige Ziegel. Deshalb wird bei der Verlegung der Panels, Module und Kollektoren darauf geachtet, dass die Dachneigung entsprechend gross ist, beispielsweise einen Winkel von mindestens 20° zu einer horizontalen, d.h. waagrechten, Fläche aufweist. Zudem ist es wichtig, dass die Panels, Module und Kollektoren zum Teil um 15 cm oder mehr überlappen, d.h. überdecken. Allerdings wird dadurch ein Teil der teuren Panels, Module und Kollektoren überdeckt, wodurch der Wirkungsgrad je Panel, Modul und Kollektor reduziert wird. Zusätzlich schränkt sich der Anwendungsbereich auf Dächer ein, die einen entsprechend hohen Neigungswinkel aufweisen.

Die WO-A-2010128375 beschreibt ein Dichtungsprofil um ein oder mehrere Solarmodule auf einem Dach oder an einer Wand eines Gebäudes zu befestigen. Das Dichtungsprofil besitzt Löcher, um das Profil am Untergrund zu befestigen. Liegen zwei Module überlappend übereinander, besitzt das Dichtprofil eine S-Profilierung mit dementsprechend zwei Hohlräumen, in welche die überlappenden Solarmodule eingefügt werden. Dringt Wasser in den Hohlraum des oberen Solarmoduls, kann dieses, beispielsweise nach Verstopfung von vorgesehenen Abflussmöglichkeiten, auf den darunter liegenden, dachaufwärts angeordneten Profilteil gelangen und seitwärts abgeführt werden. Allerdings sieht das in dieser Schrift beschriebene System keinen Abfluss des so aufgefangenen Wassers vor. Somit gelangt es in den Dachuntergrund, was zu Schäden führen kann. Zudem liegen die Seiten der Solarmodule in der Luft und werden nicht beispielsweise durch Längsprofile abgestützt, was die maximal mögliche Belastung der Solarmodule stark verringert. Dadurch können solche Systeme nicht in Gebieten eingesetzt werden, wo beispielsweise grössere Schneemengen auftreten können.

Die WO-A-2012/168627 beschreibt ein Befestigungs- und Abdichtungs-System für Solardächer umfassend eine Vielzahl von Längsprofilen, Querstangen und Befestigungselementen, mit welchen die Solarmodule an den Längsprofilen befestigt werden. Die Querstangen, welche in horizontaler Richtung oberhalb weiterer Querverbindungen angeordnet sind und mit den Enden auf den Längsprofilen liegen, sind gestuft und beinhalten eine untere und eine obere Halterung. Auf den Querstangen ist eine Dichtung aus weichem Kunststoff wie EPDM, Silikon oder dem Elastomer TPE angeordnet. In diese Dichtung wird dann das untere Solarmodul eingeschoben. Das obere Solarmodul kommt auf die weiche Dichtung zu liegen und überlappt das untere Solarmodul leicht. Die Längsprofile erstrecken sich über die gesamte Länge der Fliessrichtung und parallel zur Dachoberfläche, sodass allfälliges Wasser im gleichen Längsprofil von oben bis unten abfliesst. Dadurch können sie leicht verstopft werden, zumal auch die Befestigungselemente wie Schrauben auch den Abfluss verstopfen können. Da sich die übereinander liegenden Solarmodule überlappen, nicht aber die Längsprofile, liegen die Seiten der Solarmodule nicht auf den Längsprofilen auf und werden dadurch durch diese nicht gestützt. Dies verringert jedoch die maximale Belastung der Solarmodule. Somit können solche Systeme nicht in Gebieten eingesetzt werden, wo beispielsweise grössere Schneemengen auftreten können. Durch den Einsatz von Befestigungselementen können zudem die Solarmodule beschädigen werden und die Kunststoffdichtungen besitzen insbesondere bei starker Sonneneinstrahlung und/oder erhöhten Temperaturen eine geringe Altersbeständigkeit. Zudem ist das beschriebene System komplex und durch die Vielzahl der Komponenten nicht einfach zu montieren.

Die DE-U-202008009241 beschreibt ein Halteprofil für plattenförmige Module wie Dachmodule, wobei das Halteprofil einen einteiligen flexiblen Profilkörper aus Kunststoff aufweist, welcher derart ausgebildet ist, um zwei benachbarte Module an einer Dachunterkonstruktion in einem Überlappungszustand zu halten, so dass sich der flexible Profilkörper abschnittsweise zwischen den Modulen erstreckt. Die seitlich benachbarten Module sind ebenfalls mit einem Dichtprofil aus Kunststoff miteinander verbunden, sodass Regenwasser über die Oberfläche der Dachmodule abfliesst. Die Seiten der Solarmodule werden in dieser Konstruktion nicht beispielsweise durch Längsprofile abgestützt, was die maximale Belastung der Solarmodule verringert. Somit können solche Systeme nicht in Gebieten eingesetzt werden, wo beispielsweise grössere Schneemengen auftreten können. Obwohl durch die Dichtprofile versucht wird, Regenwasser vom Eindringen in die Dachkonstruktion fern zu halten, kann Regenwasser bei starkem Regen, beispielsweise begleitet mit Winden, durch die Lücken zwischen den Dichtprofilen in die Dachkonstruktion eindringen und Schaden anrichten. Zudem besitzen die Profilkörper aus Kunststoff insbesondere bei starker Sonneneinstrahlung und/oder erhöhten Temperaturen eine geringe Altersbeständigkeit.

Die WO-A-2012120208 beschreibt eine Bedeckung für eine geneigte Dachplatte umfassend einen Rahmen, eine Vielzahl an Photovoltaik Modulen, die in Fliessrichtung sich überlappen, und Dichtungen aus weichem Kunststoffmaterial wie EPDM, Gummi, Chlor-haltigem Elastomer, fluoriertem Elastomer und/oder Silikon. Die Photovoltaik Module liegen seitlich auf einer vertikalen Regenrinne auf, wobei die Länge der Regenrinne der Dachlänge in vertikaler Richtung entspricht. Letztere beinhaltet komprimierbare Fugen aus Gummi oder Kunststoff wie EPDM, welche auf einer Platte befestigt sind. Obwohl die Module auf der komprimierbaren Fuge aufliegen, bieten Letztere dem Modul bei Belastung keinen oder nur sehr geringen zusätzlichen Halt. Somit können solche Systeme nicht in Gebieten eingesetzt werden, wo beispielsweise grössere Schneemengen zu erwarten sind. Zudem ist die Herstellung der Regenrinne mit den komprimierbaren Gummi- oder Kunststoff-Fugen komplex und die Altersbeständigkeit der Kunststoffteile wird insbesondere bei starker Sonneneinstrahlung und/oder erhöhten Temperaturen stark erniedrigt.

Daher stellt sich die Aufgabe, eine wetterfeste, insbesondere eine wasserfeste und wasserdichte, Dachbedeckung in Form einer Indach-Bedeckung, beispielsweise zur Sonnenenergiegewinnung mittels Panels, Modulen und/oder Kollektoren, bereit zu stellen, die auch bei Dächern mit geringer Neigung eingesetzt und hohen Belastungen ausgesetzt werden kann und trotzdem nur eine geringe Überlappung der jeweiligen Panels, Modulen und/oder Kollektoren benötigt.

Diese Aufgabe konnte überraschenderweise gelöst werden mit einer Dachbedeckung (1) gemäß Anspruch 1. Beansprucht wird auch ein Verfahren zum Montieren der erfindungsgemässen Dachbedeckung (1) gemäß Anspruch 8. Gegenstand der Erfindung ist zudem auch die Verwendung der erfindungsgemässen Dachbedeckung (1) und der nach dem erfindungsgemässen Verfahren hergestellten Dachbedeckung (1) gemäß Anspruch 14. Die vorliegende erfindungsgemässe Dachbedeckung (1), das erfindungsgemässe Verfahren zur Herstellung der Dachbedeckung (1) und die erfindungsgemässe Verwendung besitzen viele Vorteile. So wurde überraschend gefunden, dass selbst bei einem sehr geringen Neigungswinkel des Daches von lediglich etwa 6° zur horizontalen Fläche, d.h. waagrechten und somit rechtwinklig zur Lotrichtung, nur eine sehr geringe Überlappung der Platten, d.h. beispielsweise der Panels, Modulen und/oder Kollektoren, von beispielsweise einem oder wenigen Zentimetern notwendig ist, um die notwendige Wetter- und insbesondere Wasserfestigkeit der Dachbedeckung (1) zu gewährleisten. Dadurch betrifft die Überlappung nur die Randzone der Panels, Modulen und/oder Kollektoren und nicht die zur Energiegewinnung notwendigen Bereiche, wodurch keine Einschränkung in der Energieeffizienz der Dachbedeckung (1) entsteht. Zudem erlaubt die erfindungsgemässe Dachbedeckung (1), das erfindungsgemässe Verfahren sowie die erfindungsgemässe Verwendung die Montage von Platten ohne dass diese - beispielsweise durch Schrauben - am Untergrund befestigt werden. Dies ist insbesondere bei Platten aus Glas, wie beispielsweise Photovoltaik-Platten, vorteilhaft.

Überraschenderweise wurde gefunden, dass durch die erfindungsgemässe Dachbedeckung (1) und das erfindungsgemässe Verfahren zur Herstellung der Dachbedeckung (1) das Wasser auch bei grossen Niederschlagsmengen und heftigen Winden über die Oberfläche der Platten abgeführt wird und nicht in die Dachunterkonstruktion gelangt. Durch die Dichtung wird verhindert, dass Wasser zwischen die sich überlappenden Platten (7) und (8) gelangt. Einen vergleichbaren Effekt weist die Wasser Auffangwanne (5) auf. Denn sollte etwas Wasser zwischen die sich überlappenden Platten (7) und (8) gelangen, wird es in der Wasser Auffangwanne (5) aufgefangen. Von dort fliesst das Wasser zu den seitlichen Enden (5a), (5b) der Auffangwanne (5), wo es auf die seitlichen Fugenprofile (3), (3') gelangt, die in Fliessrichtung des Wassers angeordnet sind. Dadurch fliesst das Wasser der Schwerkraft folgend, seitlich der Platte (7) nach unten. Am Ende der Platte, und somit in der Regel auch am Ende der seitlichen Fugenprofile, fliesst dann das Wasser aufgrund der Überlappung der Platten (7), (8) durch die oberen Fugenprofile auf die darunter liegende Platte. Somit wird das auf den Fugenprofilen abfliessende Wasser nach jeder Plattenlänge wieder neu über die Oberfläche der Dachbedeckung (1) abgeführt. Dadurch werden die Auffangwanne (5) wie auch die Fugenprofile (3), (3'), (4) und (4') nicht mit Wasser überlastet, sondern dies wird nach jeder Platte neu über die Oberfläche vollständig abgeführt. Durch diese erfindungsgemässe Dachbedeckung tritt somit kein Wasser in den Untergrund ein und dieser bleibt trocken.

Durch die erfindungsgemässe Dachbedeckung (1) und das erfindungsgemässe Verfahren zur Herstellung der Dachbedeckung (1) liegt zudem in der Regel jede Seite der Platten direkt oder indirekt auf dem Untergrund auf und/oder werden durch ein hartes und somit starres Material wie die Fugenprofile (3), (3'), (4) und (4'), resp. die Wasser Auffangwanne (5), gestützt. Die beiden fallenden Seitenränder (7a) und (7b) der Platte (7) liegen auf einem Teil der seitlich anliegenden Fugenprofile (3) und (3'), die obere Seite (7c) mit der daran befestigten Auffangwanne (5) liegt auf dem unteren Lattenteil (2a-2) und die untere Seite der Platte (7d) liegt beispielsweise auf dem weiter unten befestigten höheren Lattenteil (2a-1) und/oder auf dem oder den Plattenbefestigungselementen (6). Dadurch können überraschenderweise grössere Platten auch bei geringem Neigungswinkel wesentlich höheren Drucklasten, wie beispielsweise Schnee, standhalten. Bei der erfindungsgemässen Dachbedeckung (1) und der nach dem erfindungsgemässen Verfahren hergestellten Verfahren sind die unteren Fugenprofile (3), (3') parallel zur unteren Platte (7) und die oberen Fugenprofile (4) und (4') parallel zur oberen Platte (8). Diese sind jedoch nicht parallel zu den im Wesentlichen in Fliessrichtung verlegten Latten (2b). Somit können mit der erfindungsgemässen Dachbedeckung (1) und dem erfindungsgemässen Verfahren überraschenderweise äusserst wetterfeste, insbesondere wasserfeste, Gebäudedächer mit niedrigem Neigungswinkel und grosser Dachlast erstellt werden, ohne dass eine zusätzliche Dachbedeckung wie Ziegel notwendig ist. Zudem eignet sich die erfindungsgemässe Dachbedeckung und das erfindungsgemässe Verfahren auch gut für Gebäudefassaden. Die erfindungsgemäße Dachbedeckung weist auch eine Wasser Auffangwanne auf, umfassend:
- ein im Wesentlichen U-förmiges Aufsteckprofil (5-1),
- eine Auffangrinne (5-2) ohne Löcher,
- mindestens zwei Führungselemente (5-3), die in die U-förmige Öffnung (5-5) des Aufsteckprofils (5-1) hineinragen, und
- mindestens zwei Auflageelemente (5-4), die ausserhalb der Öffnung (5-5) des U-förmigen Aufsteckprofils (5-1) angebracht sind und im Wesentlichen mit einer geraden Linie miteinander verbunden werden können, wobei die Auffangwanne (5) aus hartem Material, bevorzugt aus Metall oder Hart-Kunststoff, besteht.

Die Wasser Auffangwanne (5), welche bevorzugt am oberen Seitenrand (7c) der Platte (7) mit der U-förmige Öffnung des Aufsteckprofils (5-1) befestigt werden kann, ermöglicht überraschend, dass der Zwischenraum zwischen den überlappenden Platten sehr klein gehalten werden kann. Die mindestens zwei Führungselemente (5-3) ermöglichen eine gute Fixierung der Platte (7) in der U-förmigen Öffnung des Aufsteckprofils (5-1). Die mindestens zwei Auflageelemente (5-4), die ausserhalb der Öffnung (5-5) des U-förmigen Aufsteckprofils (5-1) angebracht sind, erlauben einerseits eine geeignete Auflage der Platte (8), die darauf zu liegen kommt. Zudem bilden sie eine Barriere für das Wasser, dass dieses nicht oder nur sehr bedingt, in die Auffangrinne (5-2), aber nicht darüber hinaus, fliesst. Die Auffangrinne (5-2) und das Aufsteckprofil (5-1) bilden zusammen im Wesentlichen die Wasser Auffangwanne (5), wobei die Auffangrinne (5-2) im Wesentlichen am U-förmigen Aufsteckprofil (5-1) befestigt und über die ganze Länge des Aufsteckprofils (5-1) angeordnet ist. Über diese Auffangrinne (5-2) kann das Wasser - sollte es über die obere Plattenseite (7c), die durch die Platte (8) überlappt wird, durchdringen - auf einfache Art und Weise zu den seitlichen Enden (5a), (5b) der Auffangwanne (5) auf die Fugenprofile (3) und (3') abfliessen, die seitlich an der Platte (7) angebracht sind.

Es wird bemerkt, dass die EP-A-2 282 141 eine Indach-Solarkollektormontageanordnung beschreibt, umfassend eine Vielzahl von auf Tragschienen montierbaren flächigen Solarmodulen, wobei zwischen den Solarmodulen spaltartige Abstandsräume verbleiben. Unterhalb der Solarkollektoranordnung ist ein Rinnensystem ausgebildet, welches die spaltartigen Abstandsräume unterdeckt und weiterhin das Rinnensystem eine flüssigkeitsführende Orientierung und Gefälle aufweist. Diese Indach-Solarkollektormontageanordnung ist nicht überlappend und alles abfliessende Wasser fliesst dadurch in das Rinnensystem. Dadurch besteht die Gefahr, dass bei starkem Regen das Wasser über das Rinnensystem schwappt und so in den Untergrund fliesst und Schäden anrichtet. Zudem weisst es eine Vielzahl von ineinander führende Verbindungen auf, was ebenfalls leicht zu Undichtigkeiten führen kann, insbesondere wenn das Material sich bewegt, beispielsweise aufgrund von thermischen Ausdehnungen.

### Die Dachbedeckung (1)

Die erfindungsgemässe Dachbedeckung (1) und die durch das erfindungsgemässe Verfahren hergestellte Dachabdeckung (1) eignen sich insbesondere als wetterfeste Dachbedeckung für Schrägdächer von Gebäuden und für Bedeckung von Fassaden, insbesondere für Gebäudefassaden.

Es wurde überraschend gefunden, dass die Neigung der erfindungsgemässen Dachbedeckung (1) und der mit dem erfindungsgemässen Verfahren hergestellten Dachbedeckung (1) ausgestatteten Schrägdachs erstaunlich niedrig sein kann. So kann die Neigung auch bei sehr geringer Überlappung von beispielsweise 1cm einen Winkel von etwa 6° oder grösser, insbesondere von etwa 8° oder grösser, und ganz besonders bevorzugt von etwa 10° oder grösser, aufweisen, ausgehend von einem Vollwinkel von 360°. Dieser Neigungswinkel bezieht sich auf den Winkel, den eine auf den Untergrund (2) gelegte Fläche zu einer horizontalen, d.h. waagrechten, Fläche bildet.

### Der Untergrund (2)

Der Untergrund (2) der erfindungsgemässen Dachbedeckung (1) ist beispielsweise der typische Untergrund, welcher auch beim Bau einer üblichen Dachbedeckung verwendet wird. Solche Untergründe sind dem Fachmann bekannt. Ein bevorzugter Untergrund (2) ist insbesondere ein Lattenrost aus beispielsweise Kunststoff, Metall und/oder Holz. In der Regel besteht der Lattenrost aus einer Vielzahl von Latten.

Wird als Untergrund (2) ein Lattenrost verwendet, besteht der Lattenrost bevorzugt aus im Wesentlichen horizontal, d.h. waagrecht, verlegten Latten (2a) und im Wesentlichen in Fliessrichtung verlegten Latten (2b).

In einer Ausführungsform entspricht der Abstand der in der Regel parallel verlegten Latten (2a) und (2b) im Wesentlichen den Seitenlängen der zu verlegenden Platten.

In einer anderen Ausführungsform wird zwischen diesen parallel verlegten Latten zusätzlich mindestens eine Latte so verlegt, dass die darauf verlegte Platte (7) auf der Latte aufliegt. Dadurch liegt die verlegte Platte (7) nicht nur an den Rändern auf, sondern auch im Mittelteil der Platte. Alternativ - oder zusätzlich - können zwischen den Latten ein oder mehrere Druckaufleger, beispielsweise aus Kunststoff, zum Ausfüllen von Holräumen angebracht werden. Somit ist eine noch höhere Lastenbedeckung, d.h. Druckbelastung, möglich.

In einer weiteren Ausführungsform wird anstelle einer oder mehreren Latten ein vollflächiger Untergrund, beispielsweise aus Holz, so verlegt, dass die Platte (7) im Wesentlichen vollflächig darauf zu liegen kommt.

Der Vorteil dieser Ausführungsformen liegt darin, dass je grösser die Auflagefläche der Platte (7) auf Latten und/oder vollflächigem Untergrund ist, desto grösser ist die Druckbelastung, welcher die Platte (7) ausgesetzt werden kann.

In einer weiteren Ausführungsform bestehen die horizontal, d.h. waagrecht, verlegten Latten (2a) aus einem oberen höheren Lattenteil (2a-1) und aus einem unteren niederen Lattenteil (2a-2). Solche Latten (2a) können aus einer einzigen, profilierten Latte bestehen, oder aber aus zwei verschiedenen Latten beispielsweise vor Ort so zusammengesetzt und montiert werden. Die Höhe des unteren niederen Lattenteils (2a-2), vertikal zum Untergrund gemessen, kann beispielsweise zwischen etwa 0,1 und 20 cm betragen. Der oberhalb des unteren Lattenteils (2a-2) angeordnete obere höhere Lattenteil (2a-1) ist typischerweise etwa 0,1 bis 15 cm höher als der untere niedere Lattenteil (2a-2). Die Distanz wird vorteilhafterweise so abgestimmt, dass die obere Seite (7c) der unteren Platte (7) mit der Auffangwanne (5) und das Fugenprofil (3), (3'), welche auf den unteren Lattenteil (2a-2) zu liegen kommen, im Wesentlichen mit dem oberen höheren Lattenteil (2a-1) bündig sind.

### Die Fugenprofile (3), (3'), (4) und (4')

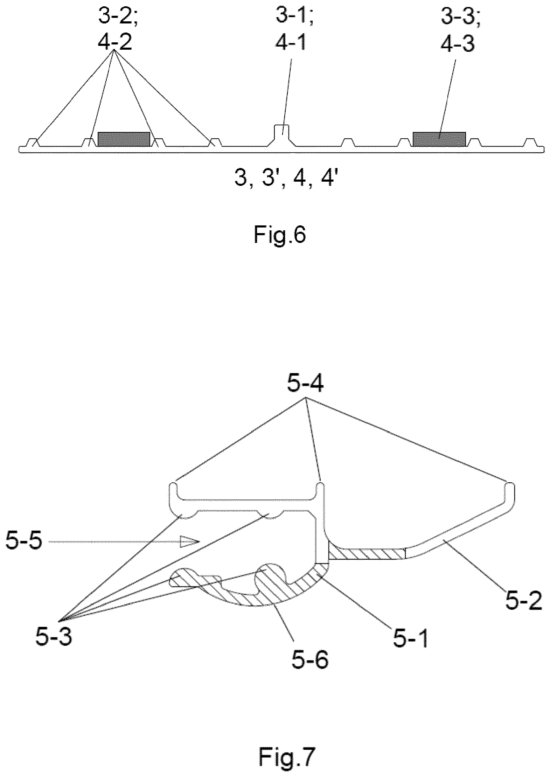

Die Fugenprofile (3), (3'), (4) und (4') besitzen bevorzugt die gleiche Form, sie sind erfindungsgemäss aber nicht miteinander identisch. Eine nicht-limitierende Ausführungsform ist in Fig. 6 dargestellt.

Die Fugenprofile (3), (3'), (4) und (4') der erfindungsgemässen Dachbedeckung werden auf dem Untergrund (2), insbesondere den Lattenrost, befestigt. Die Art und Weise der Befestigung ist dem Fachmann bekannt und kann beispielsweise mit Schrauben, Nägeln, Klemmen und/oder mit Kleben erfolgen. Die Anordnung erfolgt bevorzugt so, dass das Wasser in Fliessrichtung ungehindert abfliessen kann.

Die unteren Fugenprofile (3) und (3') begrenzen die rechte und linke Seite (7a) und (7b) der unteren Platte (7), und die oberen Fugenprofile (4) und (4') begrenzen die rechte und linke Seite (8a) und (8b) der oberen Platte (8) der erfindungsgemässen Dachbedeckung.

Die Länge der Fugenprofile (3), (3'), (4) und (4') entspricht im Wesentlichen etwa der Seitenlänge (7a), (7b) und (8a), (8b) der Platten (7) und (8), d.h. sie beträgt bevorzugt etwa 80 bis 120 %, insbesondere etwa 90 bis 110 %, und ganz besonders bevorzugt etwa 95 bis 100 % der Plattenseitenlänge (7a), (7b) und (8a), (8b). Die Fugenprofile können werkseitig oder auf der Baustelle auf die gewünschte Länge zugeschnitten werden. Somit entspricht typischerweise die Anzahl der montierten Fugenprofile auch der Anzahl der montierten Platten, wobei die letzte Plattenreihe in Fliessrichtung pro Platte noch je ein zusätzliches Fugenprofil aufweisen kann.

Die Breite der Fugenprofile (3), (3'), (4) und (4') beträgt bevorzugt etwa 1 bis 50 cm, insbesondere etwa 5 bis 40 cm, und ganz besonders bevorzugt etwa 10 bis 30 cm.

Die Fugenprofile (3), (3'), (4) und (4') besitzen bevorzugt einen Mittelsteg (3-1), (4-1), welcher nach dem Erstellen der Dachbedeckung (1) zwischen den Platten 7, 8 und 7', 8' liegt. Der Mittelsteg (3-1), (4-1) füllt die Fuge zwischen den seitlich nebeneinander liegenden Platten 7, 8 und 7', 8' zumindest teilweise aus, wodurch weniger Wasser auf die Fugenprofile (3), (3'), (4) und (4') fliesst. Zudem dient der Mittelsteg (3-1), (4-1) als Montagehilfe und kanalisiert das Wasser, wodurch es besser ablaufen kann.

In einer bevorzugten Ausführungsform umfassen die Fugenprofile (3), (3'), (4) und (4') eine Grundplatte, einen Mittelsteg (3-1), (4-1) und mindestens auf jeder Seite des Mittelstegs (3-1), (4-1) einen, bevorzugt zwei oder mehr, kleineren Steg (3-2), (4-2). Der Mittelsteg des Fugenprofils (3) resp. (3') begrenzt die beiden nebeneinander liegenden Platten (7) und (7'). Die Höhe des Mittelsteges wird in der Regel so gewählt, dass er nicht oder nur wenig über die verlegten Platten zu liegen kommt. Die kleineren Stege dienen als seitliche Abgrenzung, wodurch eine Rinne entsteht, in welcher das Wasser abgeführt werden kann. Die kleineren Stege können auch als Auflage für die nebeneinander liegenden Platten (7) und (7') dienen. Die Fugenprofile (3), (3'), (4) und (4') können beispielsweise auch mit einem Dichtungsband (3-3), (4-3) ausgestattet werden, auf welchem die Platten (7) und (7') aufliegen können. Ein nicht-limitierendes Beispiel eines Fugenprofils ist in Fig. 6 dargestellt.

Die erfindungsgemäss eingesetzten Fugenprofile (3), (3'), (4) und (4') bestehen bevorzugt aus hartem Material, insbesondere aus hartem und starrem Material. Das harte Material besitzt vorteilhafterweise eine Shore D Härte von 40 bis 100 Shore, bevorzugt von 50 bis 100 Shore, gemessen nach DIN EN ISO 868. Bevorzugte harte Materialien sind aus Hart-Kunststoff, wie beispielsweise Polyvinylchlorid (PVC), Polymethylmethacrylat (PMMA), Polyethylen (PE) und/oder Polypropylen (PP), und/oder Metallen wie Aluminium, eloxiertes Aluminium, Kupfer und/oder Blech. Aluminium und eloxiertes Aluminium sind ganz besonders bevorzugte Materialien. Durch das harte Material der Fugenprofile (3), (3'), (4) und (4') werden die Platten (7), (8) seitlich zusätzlich stabilisiert. Dadurch können die Platten (7), (8) erhöhten Belastungen wie Schnee standhalten.

In einer bevorzugten Ausführungsform liegen die Platten (7), (8) auf den Fugenprofilen (3), (3'), (4) und (4') auf. Somit werden die Platten (7), (8) nicht von den Fugenprofile (3), (3'), (4) und (4') umfasst.

Die Fugenprofile (3), (3'), (4) und (4') können auf bekannte Art und Weise hergestellt werden, beispielsweise mit Fräsen und/oder Giessen. In einer besonders bevorzugten Ausführungsform werden die Fugenprofile (3), (3'), (4) und (4') durch Extrusion, beispielsweise mit dem Stangenpressverfahren, hergestellt.

Die zwei zueinander parallelen unteren Fugenprofile (3), (3') sind in der Regel parallel zueinander angeordnet, wobei der Abstand so gewählt ist, dass die untere Platte (7) auf die durch den Mittelsteg begrenzte linke Seite des Fugenprofils (3) und rechte Seite des Fugenprofils (3') gelegt werden kann. Analoges gilt für die zwei zueinander parallelen oberen Fugenprofile (4) und (4').

Das obere Fugenprofil (4) und das untere Fugenprofil (3) sind erfindungsgemäss in Fliessrichtung, d.h. in der Fliessrichtung des Wassers, übereinander angebracht. Analoges gilt für das untere Fugenprofil (3') und das obere Fugenprofil (4').

In einer bevorzugten Ausführungsform ist der höher liegende Teil des unteren Fugenprofils (3) am unteren niederen Lattenteil (2a-2) befestigt und der tiefer liegende Teil des oberen Fugenprofils (4) am oberen höheren Lattenteil (2a-1) befestigt. Analoges gilt für das untere Fugenprofil (3') und das obere Fugenprofil (4').

In einer weiteren bevorzugten Ausführungsform überlappen die oberen Fugenprofile (4), (4') die unteren Fugenprofile (3), (3'). Die Überlappung der Fugenprofile (3) und (4), respektive (3') und (4') beträgt bevorzugt etwa 1 cm oder mehr. In der Regel beträgt die Überlappung aber nicht mehr als etwa 20 cm, insbesondere nicht mehr als 15 cm.
Ist noch keine Platte eingesetzt, kann bei diesen bevorzugten Ausführungsformen das Wasser so vom oberen Fugenprofil (4) über einen kleinen Wasserfall auf das untere Fugenprofil (3) gelangen. Ist die Platte (7) und deren seitlich benachbarte Platte (7') eingesetzt, liegen diese auf den unteren Fugenprofilen (3). (3') auf und der untere Teil der oberen Fugenprofile (4). (4') kommt auf den überlappenden Teil der Oberfläche der unteren Platten (7) und (7') zu liegen. So kann das Wasser, welches die oberen Fugenprofile (4), (4') führen, überraschend einfach und effizient über die Plattenoberflächen der Platten (7), (7') abfliessen und somit weggeleitet werden. Dies erlaubt daher, dass die Stege der erfindungsgemäss eingesetzten Fugenprofile niedriger sein können als bei anderen Dachbedeckungen, welche das Wasser über die ganze Dachlänge abführen müssen.

### Die Wasser Auffangwanne (5)

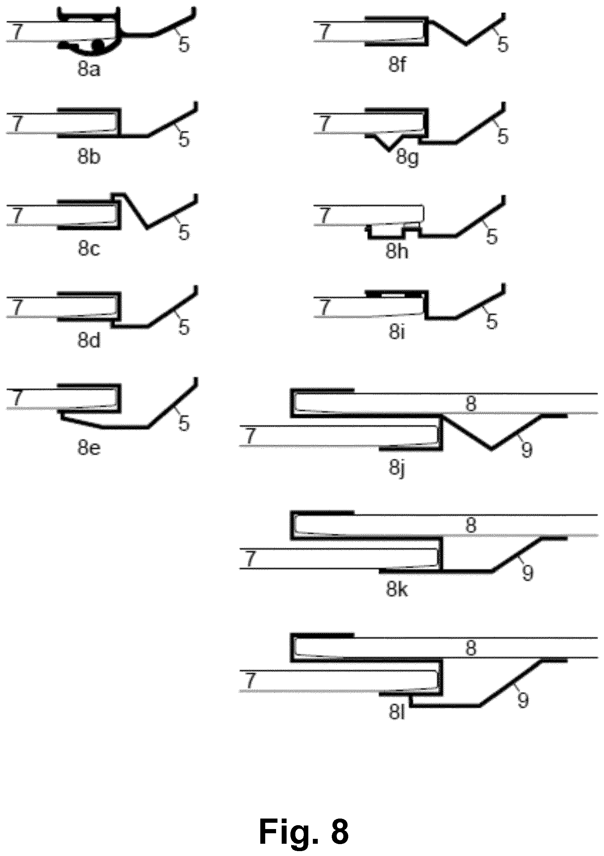

Die Auffangwanne (5) der erfindungsgemässen Dachbedeckung (1) ist im Wesentlichen horizontal, d.h. waagrecht und parallel zum Untergrund (2) angeordnet. Bevorzugt liegt die Auffangwanne (5) nach der Montage der Dachbedeckung (1) auf dem Untergrund (2), insbesondere einer horizontalen, d.h. waagrechten, Latte (2a), ganz besonders bevorzugt am unteren niederen Lattenteil (2a-2), auf. Nicht-limitierende Ausführungsformen der Auffangwanne (5) sind in Fig. 7 und 8 dargestellt. Die Auffangwanne (5), welche bei der erfindungsgemässen Dachbedeckung (1) eingesetzt werden kann, umfasst bevorzugt
- ein im Wesentlichen U-förmiges Aufsteckprofil (5-1),
- eine Auffangrinne (5-2), bevorzugt ohne Löcher,
- mindestens zwei Auflageelemente (5-4), die ausserhalb der Öffnung (5-5) des U-förmigen Aufsteckprofils (5-1) angebracht sind und im Wesentlichen mit einer geraden Linie miteinander verbunden werden können.

Die Wasser Auffangwanne (5) umfassend zudem mindestens zwei Führungselemente (5-3), die in die U-förmige Öffnung (5-5) des Aufsteckprofils (5-1) hineinragen.

Das im Wesentlichen U-förmige Aufsteckprofil (5-1) der Auffangwanne (5), die in der Dachbedeckung eingesetzt werden kann, besitzt keine Löcher. Dadurch ist sie Wasser undurchlässig. Somit kann kein Wasser in den Dachunterteil gelangen und Schäden werden verhindert.

Die Auffangwanne (5) besteht aus hartem Material, insbesondere aus hartem Material mit einer Shore D Härte von 40 bis 100 Shore, bevorzugt von 50 bis 100 Shore, gemessen nach DIN EN ISO 868. Bevorzugte harte Materialien sind Hart-Kunststoff wie beispielsweise Polyvinylchlorid (PVC), Polymethylmethacrylat (PMMA), Polyethylen (PE) und/oder Polypropylen (PP), sowie Metallen wie Aluminium, eloxiertes Aluminium, Kupfer und/oder Blech. Aluminium und eloxiertes Aluminium sind ganz besonders bevorzugte Materialien. Durch das harte Material der Auffangwanne (5) werden die Platten (7), (8), an welchen die Auffangwanne (5) befestigt wird, zusätzlich stabilisiert.

Die Auffangwanne (5) kann auf bekannte Art und Weise hergestellt werden, beispielsweise mit Fräsen und/oder Giessen. In einer besonders bevorzugten Ausführungsform wird die Auffangwanne (5) durch Extrusion, beispielsweise mit dem Stangenpressverfahren, hergestellt.
In einer bevorzugten Ausführungsform entspricht die Länge der Auffangwanne (5) etwa der Länge der oberen Plattenseite (7c) der Platte (7), d.h. sie beträgt etwa 80 bis 120 %, bevorzugt etwa 90 bis 110 %, insbesondere etwa 95 bis 100 % der Länge der oberen Plattenseite (7c).

In einer anderen bevorzugten Ausführungsform beträgt die Länge der Auffangwanne (5) der Länge von zwei oder mehr Plattenseiten (7c) und überlappt somit mindestens ein Fugenprofil. Bei dieser Ausführungsform kann die Auffangwanne (5) jeweils über den Fugenprofilen, d.h. nach jeder Plattenlänge, eine Öffnung, die in der Regel eine eine Aussparung darstellt, aufweisen, durch die allfällig eingetretenes Wasser über das darunter liegende Fugenprofil abfliessen kann.

Die Breite der Auffangwanne (5) kann beispielsweise zwischen 2 cm und 20 cm betragen und hängt auch von der spezifischen Ausführungsform ab. Umfasst beispielsweise die Auffangwanne (5) ein im Wesentlichen U-förmiges Aufsteckprofil (5-1) und eine Auffangrinne (5-2), und/oder bildet die Auffangwanne (5) mit dem Plattenbefestigungselement (6) eine Einheit (9), kann die Auffangwanne (5) auch breiter sein.

Eine besonders bevorzugte Ausführungsform der Auffangwanne (5) umfasst ein im Wesentlichen U-förmiges Aufsteckprofil (5-1), welches an die obere Seite (7c) der Platte (7) befestigt wird. Dadurch begrenzt die Auffangwanne (5) die obere Seite (7c) der Platte (7).
Die Befestigung des im Wesentlichen U-förmigen Aufsteckprofils (5-1) an der oberen Seite (7c) der Platte (7) erfolgt bevorzugt mittels Kleben, Stecken, Klemmen, Dichten und/oder mechanischer Befestigung, beispielsweise mittels Schrauben, Nieten und/oder Nägeln, wobei Kleben ganz besonders bevorzugt ist. Geeignete Kleber sind dem Fachmann bekannt. Nicht-limitierende Beispiele, die gegebenenfalls mit Glasfasern versetzt sein können, umfassen beispielsweise reaktive Kleber, Polyester Kleber, Mehrkomponenten-Kleber, Polyamid Kleber, Epoxy-Härter Kleber, Acrylat Kleber und Polyurethan Kleber.

Eine nicht-limitierende spezifische Ausführungsformen der Wasser Auffangwanne (5) ist als Querschnitt in Fig. 7 dargestellt. Zudem deuten die Fig. 8a bis 8i schematisch weitere Ausführungsformen an. In einer weiteren bevorzugten Ausführungsform der erfindungsgemässen Dachbedeckung (1) erstrecken sich die Enden (5a) und (5b) der Auffangwanne (5) vom oberen Teil (3a) des unteren Fugenprofiles (3) bis zum oberen Teil (3'a) des parallel dazu angebrachten unteren Fugenprofiles (3').
In einer anderen bevorzugten Ausführungsform der erfindungsgemässen Dachbedeckung (1) überlappen, d.h. überdecken, die unteren Teile (4b), (4'b) der oberen Fugenprofile (4), (4') die Enden (5a), (5b) der unteren Auffangwanne (5) ganz oder teilweise. Diese überlappen bevorzugt wiederum die oberen Teile (3a), (3'a) der unteren Fugenprofile (3), (3'). Dementsprechend überlappen auch die unteren Teile (3b), (3'b) der unteren Fugenprofile (3), (3') die Enden (5a), (5b) der unteren Auffangwanne (5), welche unter die Seite (7d) der Platte (7) zu liegen kommt, ganz oder teilweise.
In einer weiteren bevorzugten Ausführungsform sind an den Enden (5a) und (5b) der Auffangwanne (5) im Tal der Auffangwanne Aussparungen (5-7) angebracht, wodurch das Wasser einfacher in das darunter liegende Fugenprofil (3), (3') fliessen kann. Der gleiche Effekt kann auch durch eine Auffangwanne (5) erzielt werden, die nicht bis an die Enden der Plattenseite (7) reicht, sondern einen kleineren Teil des Fugenprofils überdeckt als die Platte (7).
In einer noch weiteren bevorzugen Ausführungsform ist der untere Teil des im Wesentlichen U-förmiges Aufsteckprofil (5-1) der Auffangwanne (5) kürzer als der restliche Teil der Auffangwanne (5), sodass er - nach der Montage und dadurch als Teil der Dachbedeckung (1) - seitlich an die Fugenprofile (3), (3') anliegt.

Eine bevorzugte Ausführungsform der Auffangwanne (5) weist die den Führungselementen (5-4) abgewandte Seite des im Wesentlichen U-förmigen Aufsteckprofils (5-1) eine Bauchung (5-6) auf, d.h. die Öffnung (5-5) des U-förmigen Aufsteckprofils ist schmaler als der Durchmesser in der Mitte der U-Form. Aufgrund dieser Bauchung lässt sich die Platte (7), an dessen oberen Seite (7c) die Auffangwanne (5) befestigt ist, überraschenderweise besonders gut beispielsweise unter das überlappende, d.h. vorstehende, Fugenprofil und/oder unter bereits befestigte Plattenbefestigungselemente (6) einfügen.

Bei einer weiteren bevorzugten Ausführungsform der Wasser Auffangwanne (5) ist die Bauchung (5-6) an den seitlichen Enden der Auffangwanne (5) abgeschnitten, und/oder am unteren Teil der Auffangrinne (5-2) ist eine Aussparung (5-7) angebracht. Durch die Aussparung (5-7) an den seitlichen Enden kann das Wasser leichter von der Auffangwanne (5) in die Fugenprofile (3), (3') fliessen. Wenn die Bauchung (5-6) an den seitlichen Enden der Auffangwanne (5) abgeschnitten ist, liegt die Platte (7) direkt auf dem Fugenprofil (3), (3') auf, was eine bessere Abstützung auf dem Untergrund zur Folge hat. Dadurch kann die Platte (7) einer noch grösseren Druckbelastung ausgesetzt werden. Dies ist beispielsweise bei Dachbedeckung im Alpenraum von grosser Bedeutung, wo je nach Höhe und Lage des Standortes meterhohe Schneemassen auf dem Dach liegen können.

### Das Plattenbefestigungselement (6)

Das Plattenbefestigungselement (6), auch Befestigungshaken (6) genannt, besitzt eine Befestigungsvorrichtung, beispielsweise einen Haken, mit welchem die Platten (7) und (8) fixiert werden. Zudem besitzt es eine Vorrichtung, beispielsweise ein Loch, mit welchem das Befestigungselement (6), beispielsweise am Untergrund, befestigt werden kann.

Die Befestigungshaken (6) bestehen bevorzugt aus Metall, insbesondere aus rostfreiem Stahl und können gegebenenfalls plastifiziert, d.h. mit Kunststoff überzogen, sein. Geeignete Befestigungshaken (6) sind dem Fachmann bekannt.

Für jede Platte (7), (8), die auf der Dachbedeckung (1) verlegt wird, wird mindestens ein, bevorzugt zwei oder mehr, Befestigungshaken (6) eingesetzt.

In einer Ausführungsform wird der untere Rand (7d), (8d) der Platten (7) und (8) der erfindungsgemässen Dachbedeckung (1) in mindestens ein, bevorzugt mehrere, Plattenbefestigungselement (6) eingeführt und dadurch befestigt.

In einer bevorzugten Ausführungsform wird das Plattenbefestigungselement (6) am Untergrund, insbesondere am Lattenrost, befestigt.

In einer weiteren bevorzugten Ausführungsform bildet das Plattenbefestigungselement (6) mit der Auffangwanne (5) eine Einheit (9), wobei die Einheit (9) am Untergrund, insbesondere am Lattenrost, befestigt wird. Vorteilhafterweise überdeckt die Auffangwanne (5) der Einheit (9) nach deren Montage teilweise den oberen Teil der Fugenprofile (3), (3').

In einer weiteren bevorzugten Ausführungsform wird das Plattenbefestigungselement (6) an mindestens einem der Fugenprofile (3), (3'), (4) und (4') befestigt.

Erfindungsgemäss ist es auch möglich, verschiedene der vorgenannten Ausführungsformen miteinander zu kombinieren.

Wird als Untergrund ein Lattenrost verwendet, kann die Befestigung an den im Wesentlichen in Fliessrichtung verlegten Latten (2b) und/oder an den im Wesentlichen horizontal, d.h. waagrecht, verlegten Latten (2a) erfolgen. Bestehen letztere aus einem oberen höheren Lattenteil (2a-1) und aus einem unteren niederen Lattenteil (2a-2), wird das Plattenbefestigungselement (6) bevorzugt am oberen höheren Lattenteil (2a-1) befestigt. Wird nur eine Latte (2a) ohne Profilierung verwendet, wird bevorzugt ein Plattenbefestigungselement (6) verwendet, welches durch eine geeignete Form die Funktion des höheren Lattenteil (2a-1) vorwegnimmt.

### Die Platten (7), (7'), (8) und (8')

Die Platten der erfindungsgemässen Dachbedeckung (1) umfassen mindestens eine untere Platte (7) und eine obere Platte (8), wobei die obere Platte (8) die untere Platte (7) überlappt. Die obere Platte (8) kann so angeordnet sein, dass die obere Platte (8) nur die untere Platte (7) überlappt oder dass die Platte (8) versetzt angeordnet ist, sodass sie auch eine Platte (7') überlappt, die neben der Platte (7) angeordnet ist.

Die Platte (7) liegt - lediglich durch den Mittelsteg (3-1) des Fugenprofils (3) getrennt, seitlich neben der Platte (7'). Die Platte (8) liegt - lediglich durch den Mittelsteg (4-1) des Fugenprofils (4) getrennt, seitlich neben der benachbarten Platte (8'). Die Platten (8) und (8') sind höher angeordnet als die Platten (7) und deren seitlich benachbarten Platte (7'). Die Platte (8) überlappt die Platte (7) und gegebenenfalls auch die Platte (7'). Gleiches gilt für die Platte (8').

Die Überlappung der Platten (7), (7') durch die Platten (8), (8') beträgt bevorzugt etwa 1 cm oder mehr. Die Überlappung kann beispielsweise auch bis etwa 20 cm, insbesondere bis etwa 15 cm, betragen. Dies ist allerdings keine Erfordernis für um eine wasserdichte Anordnung zu erhalten.

Der Art und der Grösse der Platten (7) und (8) der erfindungsgemässen Dachbedeckung (1) sind überraschenderweise keine wesentlichen Grenzen gesetzt. So können die Platten (7) und (8) beispielsweise ein Photovoltaik Panel, ein Solarpanel, ein Solarmodul, ein Sonnenkollektor zur Erzeugung von Warm- und/oder Heisswasser, eine Bauplatte, eine Holzplatte, eine Sperrholzplatte, eine Zementfaserplatte, eine Metallplatte, eine Kunststoffplatte, eine Tonplatte, eine Mineralplatte, eine Glasplatte und/oder eine Steinplatte sein. Ist die Platte eine Metallplatte, ist das Metall bevorzugt im Wesentlichen Aluminium, Kupfer, Blech, und/oder Eisen, wobei diese auch beschichtet sein können.

Die Platten (7) und (8) können alle die gleiche Plattenart sein. Es ist aber auch möglich, verschiedene Platten zu verwenden, beispielsweise sowohl ein oder mehrere Photovoltaik Panel und ein oder mehrere Sonnenkollektoren zur Erzeugung von Warm- und/oder Heisswasser. Zudem ist es auch möglich neben zu Photovoltaik Panels und/oder Sonnenkollektoren zusätzlich beispielsweise Zementfaserplatten zu verwenden. Dies ist insbesondere dann vorteilhaft, wenn mit den zur Verfügung stehenden Photovoltaik Panel und/oder Sonnenkollektoren nicht die ganze Dachfläche bedeckt werden kann oder will. Somit werden beispielsweise Zementfaserplatten in dieser Ausführungsform bevorzugt an den Randzonen der Dachbedeckung (1) eingesetzt. Solche Platten können dann auch einfach auf die gewünschten Masse, d.h. auf die aufgrund der Dachdimensionen notwendigen Masse, angepasst werden.

Die Grösse der Platten (7), (8) richtet sich im Wesentlichen nach den im Handel üblichen Massen. Aufgrund der Handhabung beim Verlegen ist die Länge der Platten (7), (8) bevorzugt zwischen etwa 60 cm und etwa 300 cm, die Breite zwischen etwa 40 cm und etwa 130 cm und die Höhe, resp. Dicke, der Platten beträgt etwa 2 mm bis etwa 10 cm oder mehr.

Aufgrund der erfindungsgemässen Dachbedeckung (1) und des erfindungsgemässen Verfahrens liegen - zumindest der grösste Teil - die fallenden Seitenränder (7a), (7b) der Platte (7) im Wesentlichen auf einem Teil der Fugenprofile (3) und (3') und die fallenden Seitenränder (8a), (8b) der Platte (8) liegen - zumindest zum grössten Teil - im Wesentlichen auf einem Teil der Fugenprofile (4) und (4'). Somit sind die abfallenden Seitenränder (7a), (7b) der Platte (7) seitlich durch die Fugenprofile (3) und (3') und die abfallenden Seitenränder (8a), (8b) der Platte (8) seitlich durch die Fugenprofile (4) und (4') begrenzt.

### Die Dichtung

Die erfindungsgemässe Dachbedeckung (1) und das erfindungsgemässe Verfahren umfassen eine Wasser Auffangwanne (5) und/oder einer Dichtung. Geeignete Dichtungen sind dem Fachmann bekannt. Nicht-limitierende Beispiele umfassen Polyurethan Dichtungen, Acrylat Dichtungen, Nitril und NBR Dichtungen, Kautschuk Dichtungen, EPDM Dichtungen, und Dichtungen aus Mehrkomponenten Klebern, Kleb- und/oder Dichtmassen, sowie Neopren-Band, EPDM-Band und Silikon-Band.

Die Dichtung wird, falls sie eingesetzt wird, zwischen den Platten (7) und (8) angebracht, um das Eindringen von Wasser zu vermeiden. In der Regel wird die Dichtung im Wesentlichen entlang der ganzen Seite angebracht, um eine vollständige Dichtung zu erreichen.

Als Dichtung kann beispielsweise eine Silikondichtung, insbesondere eine Silikonfugendichtung, verwendet werden. Mit dieser kann beispielsweise nach der Montage der Platten (7) und (8) der Spalt zwischen den Platten (7) und (8) abgedichtet werden. Solche Dichtungen sind dem Fachmann bekannt.

Alternativ, oder auch zusätzlich, kann als Dichtung beispielsweise zwischen den Platten (7), (8) auch ein Schaumkleber, beispielsweise auf Polyurethan-Basis, angebracht werden.

Als Dichtung kann beispielsweise auch komprimierbaren Schaumstoff und/oder weicher Kunststoff wie Gummi verwendet werden. Solche Dichtungen, die dem Fachmann bekannt sind, werden bevorzugt auf der Oberseite der Platte (7) im Bereich der oberen Seite (7c) und/oder auf der Unterseite der Platte (8) im Bereich der untere Seite (8d) angebracht, beispielsweise durch Kleben. Die Höhe resp. Dicke der Dichtung wird in der Regel so gewählt, dass die Dichtung beide Platten (7) und (8) berührt, bevorzugt nach der Montage der Platten sogar etwas komprimiert ist.

### Die Seitenabschlüsse der Dachbefestigung (1)

Die Dachbefestigung (1) wird durch Seitenabschlüsse begrenzt. Geeignete Seitenabschlüsse sind dem Fachmann bekannt.

Die untere Seite (7d), (7'd) der untersten Platten (7), (7') wird vorteilhafterweise nicht begrenzt, sodass das Wasser in einen Dachkännel oder eine Dachrinne fliessen kann.

Die obere Seite (8c), (8'c) der oberen Platten (8), (8') kann durch bekannte Firstprofile begrenzt sein. Solche Firstprofile sind dem Fachmann bekannt.

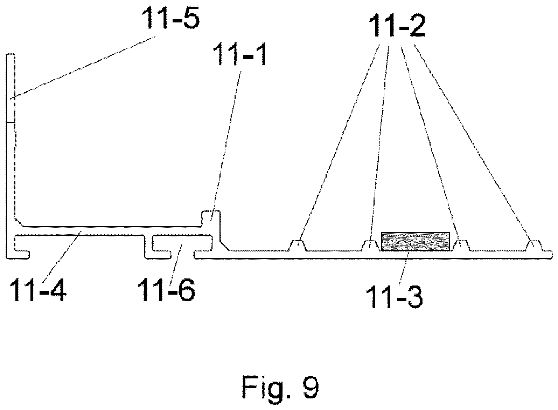

Die seitlichen Seiten (7'a), (8'a) und (7b), (8b) der Platten (7), (7'), (8) und (8') können in einer bevorzugten Ausführung durch Seitenanschlussprofile (11) und (11') begrenzt werden. Die Seitenanschlussprofile (11) und (11') können aus den gleichen Materialien und mit den gleichen Verfahren hergestellt werden wie die Fugenprofile (3), (3'), (4) und (4'). Eine nicht-limitierende, aber bevorzugte Ausführungsform eines Seitenanschlussprofiles (11) ist in Fig. 9 dargestellt und nachfolgend beschrieben. Das Seitenanschlussprofil (11') ist vorteilhafterweise identisch, aber spiegelverkehrt zum Seitenanschlussprofil (11).

### Das Verfahren zum Montieren der Dachbefestigung (1)

Das erfindungsgemässe Verfahren erlaubt überraschenderweise in einer bevorzugten Ausführungsform, dass in einfacher Art und Weise zuerst die obere Platte (8) verlegt und anschliessend die obere Seite (7c) der unteren Platte (7) unter die untere Seite (8d) der oberen Platte (8) geschoben wird. Anschliessend wird vorteilhafterweise die Platte (7), die bevorzugt auf den Fugenprofilen (3) und (3') aufliegt, einfach auf den Fugenprofilen (3) und (3') nach unten in das oder die Plattenbefestigungselemente (6) geschoben, die zwischen den unteren Bereichen, d.h. Teilen, der Fugenprofile (3b) und (3'b) angebracht sind.

Diese Arbeitsweise hat den grossen Vorteil, dass die Handwerker sich auf dem Untergrund (2) und somit auf dem Lattenrost von oben nach unten bewegen können. Dadurch besteht keine Gefahr der Beschädigung der Platten, wie dies der Fall ist wenn zuerst die unteren Platten (7) und nachträglich die oberen Platten (8) verlegt werden.

In einer weiteren bevorzugten Ausführungsform wird an der oberen Seite (7c) der Platte (7) eine Wasser Auffangwanne (5) befestigt, welche eindringendes Wasser über die Fugenprofile (3), (3') abführt. Die Befestigung erfolgt in der Regel bevor die Platte (7) montiert wird. Dies Ausführungsform ist insbesondere bevorzugt, wenn die erfindungsgemässe Auffangwanne (5) eingesetzt wird.

In einer weiteren Ausführungsform wird zwischen den Platten (7) und (8) eine Dichtung angebracht wird, um das Eindringen von Wasser zu vermeiden. In der Regel wird die Dichtung im Wesentlichen entlang der ganzen Seite angebracht, um eine vollständige Dichtung zu erreichen.

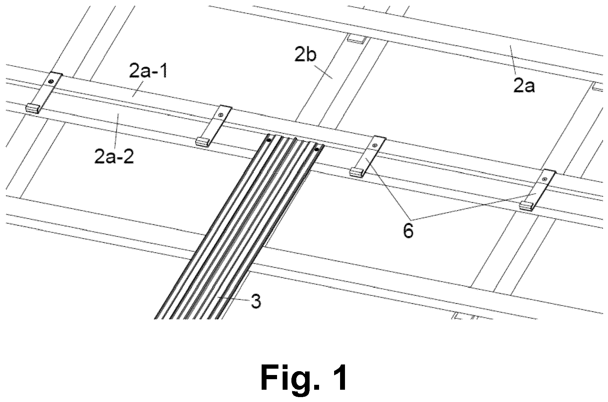

Das erfindungsgemässe Verfahren wird auch anhand von Fig. 1 bis Fig. 5 näher beschrieben.

Im Folgenden werden nicht-limitierende, bevorzugte Ausführungsformen anhand von Zeichnungen beschrieben, die nicht einschränkend auszulegen sind. Diese Erläuterungen sind Teil der vorgehenden Beschreibung. Es zeigen:
- Fig. 1:: Einen Lattenrost als Untergrund (2) mit im Wesentlichen horizontal, d.h. waagrecht, verlegten Latten (2a) und im Wesentlichen in Fliessrichtung verlegten Latten (2b). Die horizontal verlegten Latten (2a) bestehen aus einem oberen höheren Lattenteil (2a-1) und aus einem unteren niederen Lattenteil (2a-2). Der obere Teil (3a) des unteren Fugenprofils (3) ist am unteren niederen Lattenteil (2a-2) befestigt. Das Fugenprofil (3) ist in Fliessrichtung des Wassers angeordnet, sodass der untere Teil (3b) des Fugenprofils (3) auf einem weiter unten angeordneten höheren Lattenteil (2a-1) aufliegt (nicht gezeigt). In dieser Anordnung sind mehrere Plattenbefestigungselemente (6) am höheren Lattenteil (2a-1) der horizontal, d.h. waagrecht verlegten Latte (2a) angeordnet.

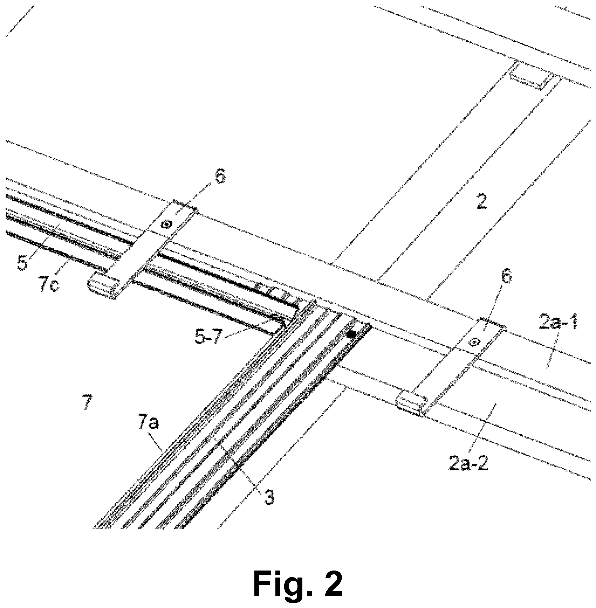

- Fig. 2:: Zusätzlich zu der in Fig. 1 beschriebenen Anordnung ist in Fig. 2 die Platte (7) unter ein Plattenbefestigungselement (6) auf eine Seite des Fugenprofils (3) eingefügt worden. Die obere Seite (7c) der Platte (7) ist durch die Auffangwanne (5) begrenzt. In dieser Ausführungsform umfasst die Auffangwanne (5) ein im Wesentlichen U-förmiges Aufsteckprofil (5-1), welches an der oberen Seite (7c) der Platte (7) befestigt ist, und eine Auffangrinne (5-2), welche am Ende der Auffangwanne (5) eine Aussparung (5-7) aufweist. Die Aussparung (5-7) ist kleiner als die Überdeckung des Fugenprofils durch die Auffangwanne. Der fallende Seitenrand (7a) der Platte (7) liegt im Wesentlichen auf einem Teil des Fugenprofils (3) auf und grenzt an den Mittelsteg (3-1).

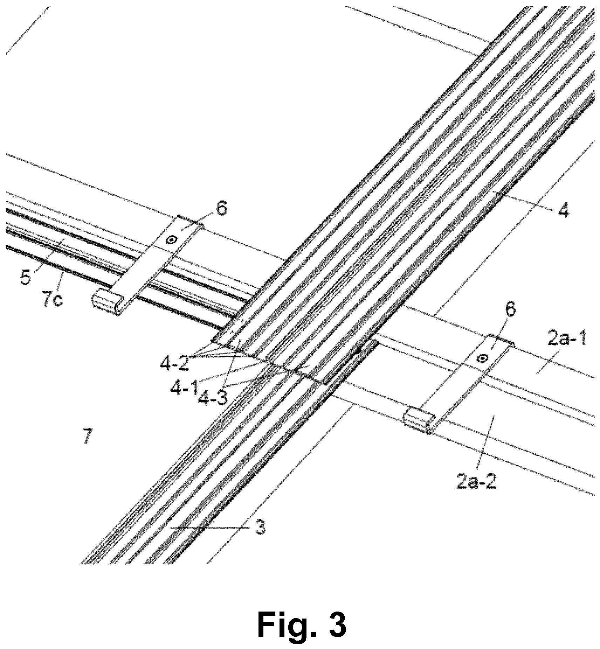

- Fig. 3:: Zusätzlich zu der in Fig. 2 beschriebenen Anordnung ist in Fig. 3 das Fugenprofil (4) gezeigt, welches auf dem oberen höheren Lattenteil (2a-1) aufliegt und gegebenenfalls dort auch befestigt ist. In dieser Ausführungsform überlappt das Fugenprofil (4) das Fugenprofil (3), die Platte (7) und die Auffangwanne (5). Fliesst nun Wasser in den durch die seitlichen kleineren Steg (4-2) und gegebenenfalls den Mittelsteg (3-1) begrenzten Rinnen des Fugenprofils (4), so wird das Wasser über die Oberfläche der darunter liegende Platte (7) abgeführt. Auf dem Fugenprofil (4) ist zudem ein Dichtungsband (4-3) gezeigt, welches Teil des Fugenprofils (4) ist und auf dem die darauf zu liegende Platte (8) aufgelegt werden kann.

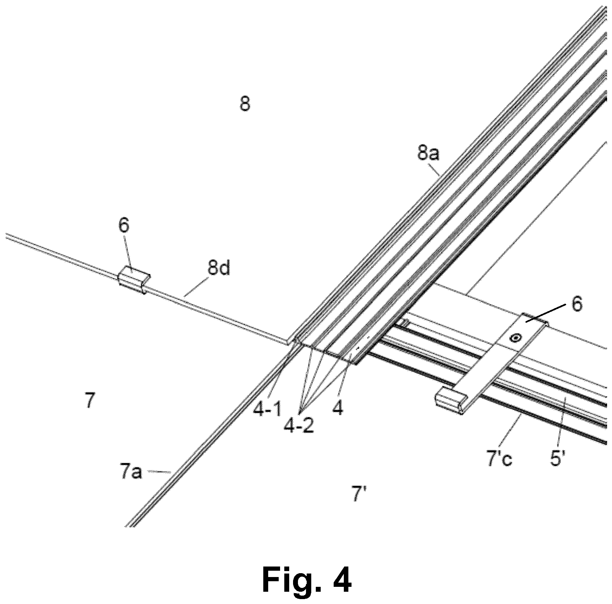

- Fig. 4:: Zusätzlich zu der in Fig. 3 beschriebenen Anordnung ist in Fig. 4 die Platte (7') mit der Auffangwanne (5') eingefügt. Diese sind bevorzugt gleich wie die Platte (7) und Auffangwanne (5) und seitlich neben diesen angeordnet, Deren Anordnung ist in Fig. 2 näher dargestellt. Zudem ist die Platte (8) gezeigt, welche auf einem Teil des Fugenprofils (4) aufliegt. In dieser Ausführungsform ist die Platte (8) etwas länger als das Fugenprofil (4). Dass die Platten (7), (7'), (8) und (8') problemlos in die Befestigungshaken (6) eingefügt werden können, ist es hilfreich, wenn die Auffangwanne (5) - sollte sie an der oberen Plattenseite (7c), (7'c), (8c) und (8'c) befestigt sein - nach der Installation der Platten zum oberen höheren Lattenteil (2a-1) noch etwas Spiel, d.h. eine gewisse Distanz, aufweist. Dadurch können die Platten mit den Auffangwannen bei deren Montage bequem bis zum Lattenteil (2a-1) gestossen werden, auf die Fugenprofile aufgelegt werden, und anschliessend in die Haken der Befestigungselemente (6) eingefügt werden.

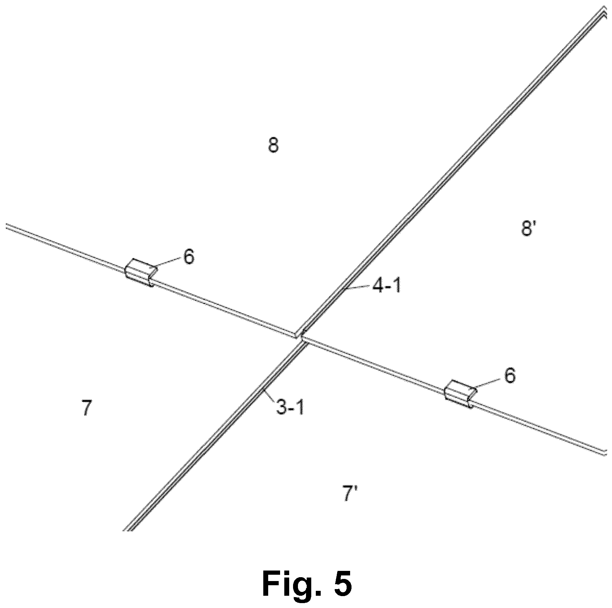

- Fig. 5:: Zusätzlich zu der in Fig. 4 beschriebenen Anordnung ist in Fig. 5 die Platte (8') seitlich neben die Platte (8) eingefügt. Die Platten (7) und (7') sowie (8) und (8') werden lediglich durch die Mittelstege (3-1) respektive (4-1) der Fugenprofile (3), (4) abgegrenzt.
- Fig. 6:: Seitenansicht einer Ausführungsform der Fugenprofile (3) und (4). In der Mitte befindet sich der etwas höhere Mittelsteg (3-1), (4-1) und auf beiden Seiten ist zumindest je ein etwas kleinerer Steg (3-2), (4-2) angebracht. Zwischen den Mittelstegen (3-1), (4-1) und den kleineren Stegen (3-2), (4-2) bilden sich Rinnen, durch die das Wasser abfliessen kann. In die Rinnen kann beispielsweise ein Dichtungsband (3-3), (4-3) gelegt, insbesondere geklebt, werden, auf welches die darauf zu liegende Platte (7), (7'), (8) und (8') aufgelegt werden kann. Wird ein Dichtungsband (3-3), (4-3) resp. eine andere Auflage verwendet, soll darauf geachtet werden, dass mindestens eine Rinne oder ein Teil davon frei bleibt, um das Abfliessen des Wassers zu ermöglichen. Falls kein Dichtungsband resp. keine andere Auflage vorhanden ist, kann die Platte auch direkt auf die kleineren Stege (3-2), (4-2) gelegt werden. Für die Fugenprofile (3') und (4') gilt analoges.
- Fig. 7:: Seitenansicht einer Ausführungsform der Wasser Auffangwanne (5). Die schraffierte Bauchung 5-6 ist an den seitlichen Enden (5a), (5b) der Ablaufwanne (5) kürzer als die Auffangrinne (5-2), d.h. sie ist abgeschnitten, und kann bei der Montage der Auffangwanne (5) seitlich an die Fugenprofile (3), (4) gelegt werden. Dadurch überdeckt die Auffangrinne (5-2) den einen Teil der Fugenprofile (3), (4) zumindest teilweise. Der schraffierte Teil der Auffangrinne (5-2) stellt die Aussparung dar, durch die das Wasser von der Auffangrinne (5-2) auf das Fugenprofil (3), (4) fliesst. Die dargestellte Auffangwanne (5) weist im oberen Teil Auflageelemente (5-4) auf, die ausserhalb der Öffnung (5-5) des Uförmigen Aufsteckprofils (5-1) angebracht sind und im Wesentlichen mit einer geraden Linie miteinander verbunden werden können. Auf diesen Auflageelementen (5-4) kann dann die darüber liegende Platte aufgelegt werden. Das im Wesentlichen U-förmige Aufsteckprofil (5-1) lässt sich über den oberen Seitenrand (7c), (8c) der Platten (7), (8) fügen, d.h. stecken, und kann beispielsweise mit Kleben daran befestigt werden. Dadurch entsteht eine im Wesentlichen wasserdichte Verbindung. Das im Wesentlichen Uförmige Aufsteckprofil (5-1) der Wasser Ablaufwanne besitzt im Innern vorteilhafterweise auch mindestens zwei Führungselemente, d.h. Ausstülpungen, (5-3), die in die Uförmige Öffnung (5-5) des Aufsteckprofils (5-1) hineinragen.
- Fig. 8:: Eine nicht-limitierende Vielzahl von möglichen Querschnitten verschiedener Ausführungsformen der Wasser Auffangwanne (5) ist dargestellt. Fig. 8a zeigt im Wesentlichen schematisch die in Fig. 7 gezeigte und oben näher erläuterte Auffangwanne (5) mit Auflageelementen (5-4), Führungselementen (5-3) und eingefügter Platte (7). Solche Auflageelemente (5-4) und Führungselemente (5-3) können auch bei den in Fig. 8b bis Fig. 8l schematisch gezeichneten Auffangwannen (5) angebracht werden. Dadurch stellen die Fig. 8b bis 8i ebenfalls schematisch die erfindungsgemässe Auffangwanne (5) dar. In Fig. 8j bis Fig. 8l bildet die Auffangwanne (5) mit dem Plattenbefestigungselement (6) eine Einheit (9). Diese können zur Herstellung der erfindungsgemässen Dachbedeckung (1) eingesetzt werden. Dabei kann das Plattenbefestigungselement (6), welches die obere Platte (8) fixiert, nur an einigen Orten der Einheit (9) angebracht sein, oder sich über die gesamte Länge der Einheit (9) erstrecken.
- Fig. 9:: Seitenansicht einer bevorzugten Ausführungsform eines Seitenanschlussprofiles (11). Das Seitenanschlussprofil (11') ist vorteilhafterweise identisch, aber spiegelverkehrt. Das dargestellte Seitenanschlussprofil (11) besitzt einen Mittelsteg (11-1) und kann auf der einen Seite des Mittelsteges (11-1) mit kleineren Stegen (11-2) gleich profiliert und optional mit einem Dichtungsband (11-3) ausgestattet sein wie die Fugenprofile (3), (3'), (4) und (4'). Auf der anderen Seite des Mittelsteges (11-1) befindet sich eine seitliche Abgrenzung (11-5). Diese Abgrenzung (11-5) kann auch mit dem Mittelsteg (11-1) identisch sein, respektive auf ihm aufgesetzt sein (nicht dargestellt). Die Abgrenzung (11-5) ist in Fig. 9 durch einen Distanzhalter (11-4) vom Mittelsteg (11-1) getrennt. Durch eine geeignete Länge des Distanzhalters (11-4), beispielsweise vergleichbar mit der Höhe der seitlichen Abgrenzung (11-5), wird bei flacher Sonneneinstrahlung der Schattenwurf der Abgrenzung (11-5) auf das beispielsweise auf den kleineren Stegen (11-2) liegende Photovoltaik Panel deutlich reduziert, wodurch die Stromerzeugung nicht oder nur unwesentlich eingeschränkt wird. Die Seitenanschlussprofile (11) und (11') können zudem mit einer Führung (11-6) ausgerüstet sein. In diese Führung kann beispielsweise ein Schraubenkopf einer zuvor montierten und hervorstehenden Schraube eingefügt werden, was dem Seitenanschlussprofil zusätzliche Stabilität verleiht.

## Patentansprüche

1. Dachbedeckung (1) umfassend
- einen Untergrund (2), insbesondere Lattenrost,
- mindestens zwei seitliche untere Fugenprofile (3, 3') und zwei obere seitliche Fugenprofile (4, 4'), wobei die Fugenprofile (3, 4) resp. (3', 4') in Fliessrichtung übereinander angebracht sind und am Untergrund (2) befestigt sind,
- mindestens eine untere Platte (7) und eine obere Platte (8), wobei die untere Seite (7d) der unteren Platte (7) und die untere Seite (8d) der oberen Platte (8) durch jeweils mindestens ein Plattenbefestigungselement (6) gehalten wird, wobei die obere Platte (8) die untere Platte (7) überlappt, und wobei die fallenden Seitenränder (8a, 8b) der oberen Platte (8) im Wesentlichen auf den linken und rechten oberen Fugenprofilen (4, 4') und die fallenden Seitenränder (7a, 7b) der unteren Platte (7) im Wesentlichen auf den linken und rechten unteren Fugenprofilen (3, 3') aufliegen,
und
-
i) eine Wasser Auffangwanne (5) mit seitlichen Enden (5a, 5b), wobei die Auffangwanne (5) im Wesentlichen waagrecht und parallel zum Untergrund (2) derart angeordnet ist, dass das in der Wasser Auffangwanne (5) aufgefangenes Wasser von dort zu den seitlichen Enden (5a, 5b) der Auffangwanne (5) fliesst, wo es auf die seitlichen unteren Fugenprofile (3, 3') gelangt, und/oder
ii) eine Dichtung, wobei die Dichtung zwischen den überlappenden Bereichen der unteren Platte (7) und der oberen Platte (8) im Wesentlichen waagrecht und parallel zum Untergrund (2) angeordnet ist,
**dadurch gekennzeichnet, dass**, in Fliessrichtung gesehen, der untere Teil der oberen Fugenprofile (4, 4') und die untere Seite (8d) der oberen Platte (8) den oberen Teil der unteren Fugenprofile (3, 3') und die obere Seite (7c) der unteren Platten (7) derart überlappen, dass das auf den oberen Fugenprofilen (4, 4') abfliessende Wasser über die darunter liegende Platte (7) abgeführt wird.

2. Dachbedeckung nach Anspruch 1, **dadurch gekennzeichnet, dass** die oberen Fugenprofile (4, 4') die unteren Fugenprofile (3, 3') überlappen.

3. Dachbedeckung nach Anspruch 1 oder 2, **dadurch gekennzeichnet, dass** die Fugenprofile (3, 3') und (4, 4') und/oder die Auffangwanne (5) aus hartem Material, bevorzugt aus Metall oder Hart-Kunststoff, besteht.

4. Dachbedeckung nach mindestens einem der Ansprüche 1 bis 3, **dadurch gekennzeichnet, dass** die Länge der Fugenprofile (3, 3') und (4, 4') im Wesentlichen der Seitenlänge (7a, 7b) und (8a, 8b) der Platten (7) und (8) entsprechen.

5. Dachbedeckung nach mindestens einem der Ansprüche 1 bis 4, **dadurch gekennzeichnet, dass**
a) das Plattenbefestigungselement (6) am Untergrund, insbesondere am Lattenrost, befestigt ist, oder
b) das Plattenbefestigungselement (6) mit der Auffangwanne (5) eine Einheit (9) bilden und die Einheit (9) am Untergrund, insbesondere am Lattenrost, befestigt ist, und/oder
c) das Plattenbefestigungselement (6) an mindestens einem der Fugenprofile (3, 3') und (4, 4') befestigt ist.

6. Dachbedeckung nach mindestens einem der Ansprüche 1 bis 5, **dadurch gekennzeichnet, dass** der Untergrund (2) ein Lattenrost ist bestehend aus im Wesentlichen waagrecht verlegten Latten (2a) und im Wesentlichen in Fliessrichtung verlegten Latten (2b), wobei die waagrecht verlegten Latten (2a) aus einem oberen höheren Lattenteil (2a-1) und aus einem unteren niederen Lattenteil (2a-2) besteht.

7. Dachbedeckung nach mindestens einem der Ansprüche 1 bis 6, **dadurch gekennzeichnet, dass** die Platte ein Photovoltaik Panel, Solarpanel, Solarmodul, Sonnenkollektor zur Erzeugung von Warm- und/oder Heisswasser, eine Bauplatte, Holzplatte, Sperrholzplatte, Zementfaserplatte, Metallplatte, Kunststoffplatte, Tonplatte, Mineralplatte, Glasplatte und/oder Steinplatte ist.

8. Verfahren zum Montieren der Dachbedeckung (1) mit einer unteren Platte (7) und einer die untere Platte (7) überlappenden oberen Platte (8), nach mindestens einem der Ansprüche 1 bis 7, umfassend die folgenden Schritte:
i) Befestigen von unteren linken und rechten Fugenprofilen (3, 3') und oberen linken und rechten Fugenprofilen (4, 4') am Untergrund (2), insbesondere am Lattenrost,
ii) Befestigen von Plattenbefestigungselementen (6) am Untergrund (2), insbesondere Lattenrost, in im Wesentlichen waagrechter Richtung, zwischen den unteren Bereichen der linken und rechten unteren Fugenprofile (3b, 3'b) und zwischen den unteren Bereichen der linken und rechten oberen Fugenprofile (4b, 4'b),
iii) Legen der Seitenränder (8a, 8b) der oberen Platte (8) im Wesentlichen auf die linken und rechten oberen Fugenprofile (4, 4') und Einfügen der unteren Seite (8d) der oberen Platte (8) in die zwischen den unteren Bereichen der linken und rechten oberen Fugenprofile (4b, 4'b) angebrachten Plattenbefestigungselemente (6), wobei die Seitenränder (8a, 8b) der oberen Platte (8) im Wesentlichen auf den linken und rechten oberen Fugenprofilen (4, 4') aufliegen, und
iv) Legen der Seitenränder (7a, 7b) der unteren Platte (7) im Wesentlichen auf die linken und rechten unteren Fugenprofile (3, 3') und Einfügen der unteren Seite (7d) der unteren Platte (7) in die zwischen den unteren Bereichen der linken und rechten unteren Fugenprofile (3b, 3'b) angebrachten Plattenbefestigungselemente (6), wobei die Seitenränder (7a, 7b) der unteren Platte (7) im Wesentlichen auf den linken und rechten unteren Fugenprofilen (3) und (3') aufliegen,
**dadurch gekennzeichnet, dass**, in Fliessrichtung gesehen, der untere Teil der oberen Fugenprofile (4b, 4'b) und die untere Seite (8d) der oberen Platte (8) den oberen Teil unteren Fugenprofile (3a, 3'a) und die obere Seite (7c) der unteren Platte (7) derart überlappen, dass das auf den oberen Fugenprofilen (4, 4') abfliessende Wasser über die darunter liegende Platte (7) abgeführt wird.

9. Verfahren nach Anspruch 8, **dadurch gekennzeichnet, dass** zuerst die obere Platte (8) verlegt wird und anschliessend die obere Seite (7c) der unteren Platte (7) unter die untere Seite (8d) der oberen Platte (8) geschoben wird.

10. Verfahren nach Anspruch 8 oder 9, **dadurch gekennzeichnet, dass** an der oberen Seite (7c) der unteren Platte (7) eine Wasser Auffangwanne (5) befestigt wird, welche eindringendes Wasser über die unteren Fugenprofile (3, 3') abführt.

11. Verfahren nach mindestens einem der Ansprüche 8 bis 10, **dadurch gekennzeichnet, dass** zwischen den Platten (7) und (8) eine Dichtung angebracht wird, um das Eindringen von Wasser zu vermeiden.

12. Dachabdeckung (1) nach Anspruch 1, **dadurch gekennzeichnet, dass** die Wasser Auffangwanne (5) geeignet ist zum Befestigen am oberen Seitenrand (7c) der Platte (7) der Dachbedeckung (1) und zum Abfliessen von Wasser auf die seitlich an der Platte (7) angebrachten Fugenprofile (3, 3'), wobei die Wasser Auffangwanne (5) weiter umfasst:
- ein im Wesentlichen U-förmiges Aufsteckprofil (5-1),
- eine Auffangrinne (5-2) ohne Löcher,
- mindestens zwei Führungselemente (5-3), die in die U-förmige Öffnung (5-5) des Aufsteckprofils (5-1) hineinragen, und
- mindestens zwei Auflageelemente (5-4), die ausserhalb der Öffnung (5-5) des U-förmigen Aufsteckprofils (5-1) angebracht sind und im Wesentlichen mit einer geraden Linie miteinander verbunden werden können,
wobei die Auffangwanne (5) aus hartem Material mit einer Shore D Härte von 40 - 100 Shore, gemessen nach DIN EN ISO 686, bevorzugt aus Metall oder Hart-Kunststoff, besteht, und wobei die den Auflageelementen (5-4) abgewandte Seite des im Wesentlichen U-förmigen Aufsteckprofils (5-1) eine Bauchung (5-6) aufweist.

13. Dachabdeckung (1) nach Anspruch 12, wobei an den seitlichen Enden der Wasser Auffangwanne (5)
- die Bauchung (5-6) abgeschnitten ist, und/oder
- am unteren Teil der Auffangrinne (5-2) eine Aussparung (5-7) angebracht ist.

14. Verwendung der Dachbedeckung (1) nach mindestens einem der Ansprüche 1 bis 7 und erhalten nach dem Verfahren nach mindestens einem der Ansprüche 8 bis 11 auf Dächern und/oder Fassaden von Gebäuden, insbesondere zur Nutzung der Sonnenenergie mit Photovoltaik Panel, Solarpanel, Solarmodulen und/oder Sonnenkollektoren zur Erzeugung von Elektrizität, Warm- und/oder Heisswasser.

## Claims

1. Roof covering (1) comprising
- a base (2), in particular a slatted frame,
- at least two lateral lower joint profiles (3, 3') and two upper lateral joint profiles (4, 4'), wherein the joint profiles (3, 4) or (3', 4') are mounted above one another in the direction of flow and fastened to the base (2),
- at least one lower panel (7) and one upper panel (8), wherein the lower side (7d) of the lower panel (7) and the lower side (8d) of the upper panel (8) are each held by at least one panel fastening element (6), wherein the upper panel (8) overlaps the lower panel (7) and wherein the falling lateral edges (8a, 8b) of the upper panel (8) rest substantially on the left and right upper joint profiles (4, 4') and the falling lateral edges (7a, 7b) of the lower panel (7) rest substantially on the left and right joint profiles (3, 3'), and
-
i) a water collecting trough (5) with lateral ends (5a, 5b), wherein the collecting trough (5) is arranged substantially horizontally and parallel to the base (2) in such a manner that the water collected in the water collecting trough (5) flows to the lateral ends (5a, 5b) of the collecting trough (5) where it reaches the lateral lower joint profiles (3, 3') and/or
ii) a seal, wherein the seal is disposed between the overlapping regions of the lower panel (7) and the upper panel (8) substantially horizontally and parallel to the base (2),
**characterized in that** when viewed in the flow direction, the lower part of the upper joint profiles (4, 4') and the lower side (8d) of the upper panel (8) overlap the upper part of the lower joint profiles (3, 3') and the upper side (7c) of the lower panels (7) in such a manner that the water draining onto the upper joint profiles (4, 4') is removed via the panel (7) located thereunder.

2. The roof covering according to claim 1, **characterized in that** the upper joint profiles (4, 4') overlap the lower joint profiles (3, 3').

3. The roof covering according to claim 1 or 2, **characterized in that** the joint profiles (3, 3') and (4, 4') and/or the collecting trough (5) consist of hard material, preferably of metal or hard plastic.

4. The roof covering according to at least one of claims 1 to 3, **characterized in that** the lengths of the joint profiles (3, 3') and (4, 4') substantially correspond to the side length (7a, 7b) and (8a, 8b) of the panels (7) and (8).

5. The roof covering according to at least one of claims 1 to 4, **characterized in that**
a) the panel fastening element (6) is fastened on the base, in particular on the slatted frame, or
b) the panel fastening element (6) with the collecting trough (5) form a unit (9) and the unit (9) is fastened to the base, in particular to the slatted frame and/or
c) the panel fastening element (6) is fastened to at least one of the joint profiles (3, 3') and (4, 4').

6. The roof covering according to at least one of claims 1 to 5, **characterized in that** the base (2) is a slatted framework consisting of substantially horizontally laid slats (2a) and slats (2b) laid substantially in the direction of flow, wherein the horizontally laid slats (2a) consist of an upper higher slat part (2a-1) and of an under lower slat part (2a-2).

7. The roof covering according to at least one of claims 1 to 6, **characterized in that** the panel is a photovoltaic panel, solar panel, solar module, solar collector for generating warm and/or hot water, a building panel, wood panel, plywood panel, cement fibre panel, metal panel, plastic panel, clay panel, mineral panel, glass panel and/or stone panel.

8. Method for mounting the roof covering (1) having a lower panel (7) and an upper panel (8) overlapping the lower panel (7) according to at least one of claims 1 to 7, comprising the following steps:
i) fastening lower left and right joint profiles (3, 3') and upper left and right joint profiles (4, 4') on the base (2), in particular on the slatted frame,
ii) fastening panel fastening elements (6) on the base (2), in particular slatted frame, in the substantially horizontal direction, between the lower regions of the left and right lower joint profiles (3b, 3'b) and between the lower regions of the left and right upper joint profiles (4b, 4'b),
iii) laying the lateral edges (8a, 8b) of the upper panel (8) substantially on the left and right upper joint profiles (4, 4') and inserting the lower side (8d) of the upper panel (8) into the panel fastening elements (6) mounted between the lower regions of the left and right upper joint profiles (4b, 4'b), wherein the lateral edges (8a, 8b) of the upper panel (8) rest substantially on the left and right upper joint profiles (4, 4') and
iv) laying the lateral edges (7a, 7b) of the lower panel (7) substantially on the left and right lower joint profiles (3, 3') and inserting the lower side (7d) of the lower panel (7) into the panel fastening elements (6) mounted between the lower regions of the left and right lower joint profiles (3b, 3'b), wherein the lateral edges (7a, 7b) of the lower panel (7) substantially rest on the left and right lower joint profiles (3) and (3'),
**characterized in that** when viewed in the flow direction, the lower part of the upper joint profiles (4b, 4'b) and the lower side (8d) of the upper panel (8) overlap the upper part of the lower joint profiles (3a, 3'a) and the upper side (7c) of the lower panel (7) in such a manner that the water draining onto the upper joint profiles (4, 4') is removed via the panel (7) located thereunder.

9. The method according to claim 8, **characterized in that** firstly the upper panel (8) is laid and then the upper side (7c) of the lower panel (7) is pushed under the lower side (8d) of the upper panel (8).

10. The method according to claim 8 or 9, **characterized in that** a water collecting trough (5) is fastened to the upper side (7c) of the lower panel (7) which removes penetrating water via the lower joint profiles (3, 3').

11. The method according to at least one of claims 8 to 10, **characterized in that** a seal is mounted between the panels (7) and (8) to avoid the penetration of water.

12. The roof covering (1) according to claim 1, **characterized in that** the water collecting trough (5) is suitable for fastening on the upper lateral edge (7c) of the panel (7) of the roof covering (1) and for draining water onto the joint profiles (3, 3') attached laterally to the panel (7), wherein the water collecting trough (5) further comprises:
- a substantially U-shaped plug-in profile (5-1),
- a collecting channel (5-2) without holes,
- at least two guide elements (5-3) which project into the U-shaped opening (5-5) of the plug-in profile (5-1) and
- at least two supporting elements (5-4) which are mounted outside the opening (5-5) of the U-shaped plug-in profile (5-1) and can be connected to one another substantially with a straight line, wherein the collecting trough (5) consists of a hard material having a Shore D hardness of 40-100 Shore measured according to DIN EN ISO 686, preferably made of metal or hard plastic and wherein the side of the substantially U-shaped plug-in profile (5-1) facing away from the supporting elements (5-4) has a protuberance (5-6).

13. The roof covering (1) according to claim 12, wherein at the lateral ends of the water collecting trough (5)
- the protuberance (5-6) is cut away and/or
- a recess (5-7) is provided on the lower part of the collecting channel (5-2).

14. Use of the roof covering (1) according to at least one of claims 1 to 7 and obtained using the method according to at least one of claims 8 to 11 on roofs and/or facades of buildings, in particular for use of solar energy with photovoltaic panels, solar panels, solar modules and/or solar collectors for generating electricity, warm and/or hot water.

## Revendications

1. Couverture de toit (1) comprenant
- un soubassement (2), en particulier un caillebotis,
- au moins deux joints profilés latéraux inférieurs (3, 3') et au moins deux joints profilés latéraux supérieurs (4, 4'), les joints profilés (3, 4) ou (3', 4') étant superposés dans le sens d'écoulement et fixés au soubassement (2),
- au moins une plaque inférieure (7) et une plaque supérieure (8), la face inférieure (7d) de la plaque inférieure (7) et la face inférieure (8d) de la plaque supérieure (8) étant maintenues respectivement par au moins un élément de fixation de plaques (6), la plaque supérieure (8) chevauchant la plaque inférieure (7) et les bords latéraux descendants (8a, 8b) de la plaque supérieure (8) reposant substantiellement sur les joints profilés supérieurs gauche et droit (4, 4') et les bords latéraux descendants (7a, 7b) de la plaque inférieure (7) reposant substantiellement sur les joints profilés inférieurs gauche et droit (3, 3'), et
i) un bac récupérateur d'eau (5) doté d'extrémités latérales (5a, 5b), le bac récupérateur (5) étant disposé substantiellement horizontalement et parallèlement au soubassement (2) de manière à ce que l'eau récupérée dans le bac récupérateur d'eau (5) s'écoule de là vers les extrémités latérales (5a, 5b) du bac récupérateur (5) ou elle arrive sur les joints profilés inférieurs latéraux (3, 3'), et/ou
-
ii) un joint, le joint étant disposé entre les parties en chevauchement de la plaque inférieure (7) et de la plaque supérieure (8) substantiellement horizontalement et parallèlement au soubassement (2),
**caractérisée en ce que**, vue dans le sens d'écoulement, la partie inférieure des joints profilés supérieurs (4, 4') et la face inférieure (8d) de la plaque supérieure (8) chevauchent la partie supérieure des joints profilés inférieurs (3, 3') et la face supérieure (7c) des plaques inférieures (7) de manière à ce que l'eau s'écoulant sur les joints profilés supérieurs (4, 4') soit évacuée par la plaque située en dessous (7).

2. Couverture de toit selon la revendication 1, **caractérisée en ce que** les joints profilés supérieurs (4, 4') chevauchent les joints profilés inférieurs (3, 3').

3. Couverture de toit selon la revendication 1 ou 2, **caractérisée en ce que** les joints profilés (3, 3') et (4, 4') et/ou le bac récupérateur (5) sont composés de matériau dur, de préférence de métal ou de matière plastique dure.

4. Couverture de toit selon au moins une des revendications 1 à 3, **caractérisée en ce que** la longueur des joints profilés (3, 3') et (4, 4') équivaut sensiblement à la longueur latérale (7a, 7b) et (8a, 8b) des plaques (7) et (8).

5. Couverture de toit selon au moins une des revendications 1 à 4, **caractérisée en ce que**
a) l'élément de fixation de plaques (6) est fixé au soubassement, en particulier au caillebotis, ou
b) l'élément de fixation de plaques (6) constitue avec le bac récupérateur (5) une unité (9) et l'unité (9) est fixée au soubassement, en particulier au caillebotis, et/ou
c) l'élément de fixation de plaques (6) est fixé à au moins un des joints profilés (3, 3') et (4, 4').

6. Couverture de toit selon au moins une des revendications 1 à 5, **caractérisée en ce que** le soubassement (2) est un caillebotis composé de lattes substantiellement horizontales (2a) et posé substantiellement dans le sens d'écoulement (2b), les lattes posées horizontalement (2a) étant composées d'une partie supérieure de latte relativement élevée (2a-1) et d'une partie inférieure de latte relativement basse (2a-2).

7. Couverture de toit selon au moins une des revendications 1 à 6, **caractérisée en ce que** la plaque est un panneau photovoltaïque, un panneau solaire, un module solaire, un connecteur solaire destiné à produire de l'eau chaude et/ou bouillante, une plaque de construction, une plaque en bois, une plaque en contreplaqué, une plaque en fibre de ciment, une plaque métallique, une plaque en matière plastique, une plaque en argile, une plaque minérale, une plaque en verre et/ou une plaque en pierre.

8. Procédé de montage de la couverture de toit (1) comportant une plaque inférieure (7) et une plaque supérieure (8) chevauchant la plaque inférieure (7) selon au moins une des revendications 1 à 7, comprenant les étapes suivantes :
i) fixation des joints profilés inférieurs gauche et droit (3, 3') et des joints profilés supérieurs gauche et droit (4, 4') au soubassement (2), en particulier au caillebotis,
ii) fixation d'éléments de fixation de plaques (6) au soubassement (2), en particulier au caillebotis, dans le sens substantiellement horizontal, entre les parties inférieures des joints profilés inférieurs gauche et droit (3b, 3'b) et entre les parties inférieures des joints profilés supérieurs gauche et droit (4b, 4'b),
iii) pose des bords latéraux (8a, 8b) de la plaque supérieure (8) substantiellement sur les joints profilés supérieurs gauche et droit (4, 4') et introduction de la face inférieure (8d) de la plaque supérieure (8) dans les éléments de fixation de plaques (6) installés entre les parties inférieures des joints profilés supérieurs gauche et droit (4b, 4'b), les bords latéraux (8a, 8b) de la plaque supérieure (8) reposant substantiellement sur les joints profilés supérieurs gauche et droit (4, 4'), et
iv) pose des bords latéraux (7a, 7b) de la plaque inférieure (7) substantiellement sur les joints profilés inférieurs gauche et droit (3, 3') et introduction de la face inférieure (7d) de la plaque inférieure (7) dans les éléments de fixation de plaques (6) installés entre les parties inférieures des joints profilés inférieurs gauche et droit (3b, 3'b), les bords latéraux (7a, 7b) de la plaque inférieure (7) reposant sensiblement sur les joints profilés inférieurs gauche et droit (3) et (3'),
**caractérisé en ce que**, vues dans le sens d'écoulement, la partie inférieure des joints profilés supérieurs (4b, 4'b) et la face inférieure (8d) de la plaque supérieure (8) chevauchent la partie supérieure des joints profilés inférieurs (3a, 3'a) et la face supérieure (7c) de la plaque inférieure (7) de manière à ce que l'eau s'écoulant sur les joints profilés supérieurs (4, 4') soit évacuée par la plaque située en dessous (7).

9. Procédé selon la revendication 8, **caractérisé en ce que** la plaque supérieure (8) est posée en premier, puis la face supérieure (7c) de la plaque inférieure (7) est poussée sous la face inférieure (8d) de la plaque supérieure (8).

10. Procédé selon la revendication 8 ou 9, **caractérisé en ce qu'**un bac récupérateur d'eau (5) est fixé à la face supérieure (7c) de la plaque inférieure (7) et évacue l'eau s'infiltrant par les joints profilés inférieurs (3, 3').

11. Procédé selon au moins une des revendications 8 à 10, **caractérisé en ce que**, entre les plaques (7) et (8), un joint est posé pour éviter l'infiltration d'eau.

12. Couverture de toit (1) selon la revendication 1, **caractérisée en ce que** le bac récupérateur d'eau (5) est apte à être fixé au bord latéral supérieur (7c) de la plaque (7) de la couverture de toit (1) et à faire s'écouler l'eau sur les joints profilés (3, 3') installés à côté de la plaque (7), le bac récupérateur d'eau (5) comprenant en outre :
- un profilé enfichable substantiellement en forme de U (5-1),
- une rainure de récupération (5-2) sans trous,
- au moins deux éléments de guidage (5-3) qui rentrent dans l'ouverture en forme de U (5-5) du profilé enfichable (5-1), et
- au moins deux éléments d'appui (5-4) qui sont installés à l'extérieur de l'ouverture (5-5) du profilé enfichable en forme de U (5-1), et peuvent être raccordés entre eux substantiellement par une ligne droite,
le bac récupérateur (5) étant composé de matériau dur d'une dureté Shore D de 40 à 100 Shore mesurée d'après la DIN EN ISO 686, de préférence de métal ou de matière plastique dure, et la face détournée des éléments d'appui (5-4) du profilé enfichable substantiellement en forme de U (5-1) présentant un bombement (5-6).

13. Couverture de toit (1) selon la revendication 12, dans laquelle, aux extrémités latérales du bac récupérateur d' eau (5)
- le bombement (5-6) est découpé, et/ou,
- au niveau de la partie inférieure de la rainure de récupération (5-2), une échancrure (5-7) est pratiquée.

14. Utilisation de la couverture de toit (1) selon au moins une des revendications 1 à 7, obtenue par le procédé selon au moins une des revendications 8 à 11 sur des toits et/ou des façades de bâtiments, en particulier destinée à l'utilisation de l'énergie solaire au moyen d'un panneau photovoltaïque, d'un panneau solaire, de modules solaires et/ou de collecteurs solaires pour la production d'électricité, d'eau chaude et/ou bouillante.
